# FASCICULE DE BREVET EUROPEEN

(11) **EP 1 952 194 B1**
(45) Date de publication et mention de la délivrance du brevet: **14.07.2010**
(21) Numéro de dépôt: 06831331.1
(22) Date de dépôt: 14.11.2006
(51) Int. Cl.: G02F 1/15, G02F 1/153

(54) **SYSTEME ELECTROCHROME SUR SUBSTRAT PLASTIQUE**
ELEKTROCHROMES SYSTEM AUF EINEM KUNSTSTOFFSUBSTRAT
ELECTROCHROMIC SYSTEM ON A PLASTIC SUBSTRATE

(30) Priorité: 16.11.2005 FR 0553476
(43) Date de publication de la demande: 06.08.2008
(73) Titulaire: SAINT-GOBAIN GLASS FRANCE, 92400 Courbevoie (FR)
(72) Inventeur: PIROUX, Fabienne, 93210 La Plaine Saint Denis (FR); MATHEY, Grégoire, 45110 Chateauneuf Sur Loire (FR); VALENTIN, Emmanuel, 94420 Le Plessis Trevise (FR); DUBRENAT, Samuel, 75017 Paris (FR); CHAUSSADE, Pierre, 45100 Orleans (FR); RIGAL, Françoise, 45600 Sully Sur Loire (FR)
(74) Mandataire: Colombier, Christian
(86) Numéro de dépôt international: PCT/FR2006/051169
(87) Numéro de publication internationale: WO 2007/057605

(56) Documents cités:
- US-A- 5 520 851
- US-A- 5 618 390
- US-A- 5 798 860
- US-A- 6 136 161
- US-A1- 2002 048 678

## Description

La présente invention concerne le domaine des dispositifs électrochrome comportant au moins une espèce active. Ces dispositifs électrochrome sont notamment utilisés pour fabriquer des vitrages dont la transmission lumineuse et/ou énergétique ou la réflexion lumineuse et/ou énergétique peuvent être modulées au moyen d'un courant électrique. On rappelle que des systèmes électrochromes, de manière connue, comportent au moins une espèce à coloration anodique ou à coloration cathodique comportant deux états de coloration correspondants à deux états d'oxydation, un des états étant généralement transparent.

De nombreux systèmes électrochromes sont construits sur le modèle suivant dit 'à cinq couches' : TC1 / EC1 / EL / EC2 / TC2. TC1 et TC2 sont des matériaux conducteurs électroniques, EC1 et EC2 sont des matériaux électrochromes capables d'insérer de façon réversible et simultanée des cations et des électrons et EL est un matériau électrolyte qui est à la fois un isolant électronique et un conducteur ionique. Les conducteurs électroniques sont connectés à une alimentation électrique externe et l'application d'une différence de potentiel adaptée entre les deux conducteurs électroniques commande le changement de coloration du système. Sous l'effet de la différence de potentiel, suivant le système considéré, les états d'oxydations s'inversent ou bien les ions se désinsèrent d'un matériau électrochrome et s'insèrent dans l'autre matériau électrochrome en passant par le matériau électrolyte. L'électroneutralité de tout le système est assurée par les conducteurs électroniques et le circuit d'alimentation extérieur qui permettent le transport des électrons. Le système électrochrome est généralement déposé sur un support transparent ou non, de nature organique ou minérale, qui prend alors le nom de substrat. Dans certains cas deux substrats peuvent être utilisés, soit que chacun possède une partie du système électrochrome et le système complet est obtenu par assemblage des deux substrats, soit qu'un substrat comporte l'ensemble du système électrochrome et que l'autre est destiné à protéger le système.

Lorsque le système électrochrome est destiné à travailler en transmission, les matériaux électroconducteurs sont généralement des oxydes transparents dont la conduction électronique a été amplifiée par dopage tels que In₂O₃:Sn, In₂O₃:Sb , ZnO:Al ou SnO₂:F. L'oxyde d'indium dopé à l'étain (In₂O₃:Sn ou ITO) est fréquemment retenu pour ses propriétés de conductivité électronique élevée et son absorption lumineuse faible. Lorsque le système est destiné à travailler en réflexion, l'un des matériaux électroconducteurs peut être de nature métallique.

L'un des matériaux électrochromes le plus utilisé et le plus étudié est l'oxyde de tungstène, qui passe d'une coloration bleue à une coloration transparente selon son état d'insertion des charges. C'est un matériau électrochrome à coloration cathodique, c'est-à-dire que son état coloré correspond à l'état inséré (ou réduit) et son état décoloré correspond à l'état désinséré (ou oxydé). Lors de la construction d'un système électrochrome à 5 couches il est d'usage de lui associer un matériau électrochrome à coloration anodique tel que l'oxyde de nickel ou l'oxyde d'iridium dont le mécanisme de coloration est complémentaire. Il s'ensuit une exaltation du contraste lumineux du système. Il a également été proposé d'utiliser un matériau optiquement neutre dans les états d'oxydation concernés, comme par exemple l'oxyde de cérium. Tous les matériaux précédemment cités sont de nature inorganique mais il est possible aussi d'associer des matériaux organiques comme les viologènes (sels de bipyridium), les 5,10-dihydrophénazines, les 1,4-phénylènediamines, les benzidines, les métallocènes, les bleus de Prusse ou des polymères conducteurs électroniques (polythiophène, polypyrrole, polyaniline...) ou les métallopolymères à des matériaux électrochromes inorganiques, voire de n'utiliser que des matériaux électrochromes organiques.

Lorsqu'on utilise une structure d'empilement à base essentiellement de matériaux organiques, la structure à 5 couches peut se trouver simplifiée en une structure à 3 couches TC1 / AC / TC2, au sein de laquelle la "couche" active AC se présente sous forme d'une matrice polymère, d'un gel ou d'un liquide. La couche AC comprend alors dans un même milieu tous les matériaux électroactifs nécessaires, à savoir notamment les espèces à colorations anodiques et cathodiques et éventuellement des sels ioniques ayant une fonction d'électrolyte, solubilisés dans un solvant de type carbonate de propylène. En outre, la couche AC peut aussi contenir un ou plusieurs polymères et des additifs. Les systèmes polymères à réseaux interpénétrés décrits dans la demande FR2857759 sont aussi construits sur ce modèle à trois couches. Par ailleurs, les systèmes simples appelés classiquement "viologènes", dans lesquels des espèces à coloration cathodiques de type des sels de bipyridinium (matériaux viologènes proprement dits) et des espèces à coloration anodique (par exemple des phénazines) sont solubilisés dans un liquide ou un gel à base par exemple de carbonate de propylène, sont également des systèmes à 3 couches.

Quelle que soit la structure envisagée, on prévoit que ces systèmes électrochrome soient déposés sur un substrat à fonction verrière de nature organique classiquement à base de PMMA (poly(méthacrylate de méthyle)), de PC (polycarbonate), de PET (polyéthylène téréphtalate, de PEN (polyéthylène naphtoate) ou de COC (copolymères de cyclo-oléfine).

Or le dépôt des structures électrochimiques évoquées sur un substrat de nature essentiellement organique pose un certain nombre de problèmes auxquels la présente invention se propose de remédier.

Ainsi, les inventeurs ont tout d'abord remarqué que des constituants entrant dans la composition de la couche précédemment mentionnée AC et qui étaient déposés directement sur une portion de surface du substrat de nature organique pouvaient vieillir prématurément ce dernier suite à un phénomène d'attaque chimique. D'autre part, le substrat organique n'autorise pas toujours la fonctionnalité de la couche AC. En outre, l'interaction avec le substrat peut dégrader la fonctionnalité de la couche AC.

Les inventeurs ont également fait le constat suivant :

La couche TC1 ou TC2, de nature essentiellement minérale, qui est nécessaire au fonctionnement du système électrochimique qu'il soit tout solide ou tout polymère (elle permet l'amenée de courant nécessaire au passage d'un état coloré à un état décoloré et réciproquement) pose des problèmes à l'interface avec le substrat organique. En effet, TC1 ou TC2, généralement à base d'ITO et au demeurant épaisse pour obtenir la résistivité requise (inférieure à 5 ohm carré), demande un dépôt à chaud (plusieurs centaines de degrés) afin d'améliorer sa cristallinité, ce qui est possible lorsque le substrat à fonction verrière est inorganique (en verre) mais très difficilement envisageable lorsque le substrat est organique.

La présente invention vise donc à pallier les inconvénients en proposant une modification du substrat de nature organique pour le rendre compatible avec une structure d'empilement électrochimique.

A cet effet, la présente invention a pour objet un système électrochrome comportant au moins un substrat de nature organique, au moins une couche électroconductrice et au moins une couche de matériau électrochrome active selon la revendication 1.

Grâce à l'utilisation d'une couche à l'interface entre le substrat et la couche électroconductrice, il est possible d'une part, d'améliorer l'adhésion entre le substrat et la couche électroconductrice (en compensant les différences de contraintes et de dilatation du substrat et de la couche électroconductrice) et d'autre part on limite les agressions chimiques du substrat par les composants du système AC.

Dans d'autres modes de réalisation préférés de l'invention, on peut éventuellement avoir recours en outre à l'une et/ou à l'autre des dispositions suivantes :
- le substrat comprend du PMMA
- le substrat est du PMMA étiré
- la couche organique est un vernis à base de polysiloxane,
- la couche organique possède une épaisseur comprise entre 0.5 µm à 10 µm et préférentiellement de 1 à 3 µm.
- la couche électroconductrice est du type métallique ou du type TCO (Transparent Conductive Oxide) en ITO, SnO₂:F, ZnO :Al, ou être un multi-couche du type TCO/métal/TCO, ce métal étant choisi notamment parmi l'argent, l'or, le platine, le cuivre, ou un multi-couche de type NiCr/métal/NiCr, le métal étant choisi également notamment parmi l'argent, l'or, le platine, le cuivre.
- la couche barrière possède une épaisseur de 50 nm à 500 nm et préférentiellement de 100 nm à 300 nm,
- Le système à 3 couches avec la couche centrale AC électrochimiquement active comprend dans un même milieu les matériaux électroactifs à coloration anodique et cathodique, un ou plusieurs solvants, éventuellement un ou plusieurs polymères et éventuellement un ou plusieurs sels ioniques jouant le rôle d'électrolyte si nécessaire,
- les espèces à coloration anodique sont des composés organiques comme les dérivés de la phénazine comme par exemple la 5,10-dihydrophénazine, de la 1,4-phénylènediamine, de benzidine, de métallocène, de phénothiazine, de carbazole,
- les espèces à coloration cathodique sont des composés organiques comme les dérivés de viologène (sel de bipyridinium) comme les méthyl-viologène tétrafluoroborates ou les octyl-viologène tétrafluoroborates, ou de quinone ou encore de polythiophènes,
- les solvants peuvent être du diméthylsulfoxyde, du N,N-diméthylformamide, du carbonate de propylène, du carbonate d'éthylène, de la N-méthyl pyrolidinone, de la gamma butyrolactone, des liquides ioniques, des éthylène glycols, des alcools, des cétones, des nitriles,
- les polymères peuvent être des polyéthers, des polyesters, des polyamides, des polyimides, des polycarbonates, des polyméthacrylates, des polyacrylates, des polyacétates, des polysilanes, les polysiloxanes, des celluloses,
- les sels ioniques sont par exemple du perchlorate de lithium, des sels de trifluorométhanesulfonate (triflate), des sels de trifluorométhanesulfonylimide, des sels ammoniums ou encore des liquides ioniques,
- la couche AC possède une épaisseur de 50 µm à 500 µm et préférentiellement de 150 µm à 300 µm
- l'espèce active se présente sous la forme d'une couche électrochimiquement active qui comporte au moins un des composés suivants : oxyde de tungstène W, de niobium Nb, d'étain Sn, de bismuth Bi, de vanadium V, de nickel Ni, d'iridium Ir, de l'antimoine Sb, du tantale Ta, seul ou en mélange, et comprenant éventuellement un métal additionnel tel que le titane, le tantale ou le rhénium,
- le système comprend en outre une couche à fonction électrolyte qui est choisie parmi le nitrure de silicium (Si₃N₄), l'oxyde de molybdène (MoO₃), l'oxyde de tantale (Ta₂O₅), l'oxyde d'antimoine (Sb₂O₅), l'oxyde de nickel (NiOₓ), l'oxyde d'étain (SnO₂), l'oxyde de zirconium (ZrO₂), l'oxyde d'aluminium (Al₂O₃), de l'oxyde de silicium (SiO₂), l'oxyde de niobium (Nb₂O₅), l'oxyde de chrome (Cr₂O₃), l'oxyde de cobalt (Co₃O₄), l'oxyde de titane (TiO₂) l'oxyde de zinc (ZnO) éventuellement allié avec de l'aluminium, l'oxyde d'étain et de zinc (SnZnOₓ), l'oxyde de vanadium (V₂O₅), au moins un de ces oxydes étant éventuellement hydrogéné, ou nitruré,

Dans le contexte de l'invention, on peut exploiter une configuration simplifiée de type substrat transparent / TC1 / couche AC / TC2 / Substrat transparent (système à 3 couches) dans lequel le matériau de la couche AC est cloisonné entre deux substrats organiques. Par ailleurs, dans une configuration « tout solide » (système à 5 couches), la fabrication est simplifiée, puisque l'on peut déposer l'ensemble des couches du système, l'une après l'autre, sur un unique substrat porteur. On allège en outre le dispositif, puisqu'il n'est plus indispensable d'avoir deux substrats porteurs. L'invention concerne également les applications du dispositif électrochrome qui concerne les vitrages électrochromes. Dans ce cas, avantageusement, on prévoit que le ou les substrat(s) du dispositif est (sont) transparent(s), en plastique, quand les vitrages sont destinés à fonctionner en transmission lumineuse variable.

Quand le vitrage est destiné à fonctionner en transmission lumineuse variable, avec un dispositif muni d'un ou deux substrats transparents, on peut le monter en vitrage multiple, notamment en double-vitrage avec un autre substrat transparent, et/ou en vitrage feuilleté.

Si l'on revient à l'application des vitrages électrochromes, ces derniers peuvent avantageusement être employés en tant que vitrages pour le bâtiment, pour l'automobile, vitrages de véhicule industriel/de transport collectif, vitrages de transport terrestre, aérien (hublot en particulier), fluvial ou maritime, rétroviseurs, miroirs ou en tant qu'éléments d'optique tels que les objectifs d'appareil photographique, ou encore en tant que face avant ou élément à disposer sur ou à proximité de la face avant d'écrans de visualisation d'appareils tels que les ordinateurs ou les télévisions.

Les substrats organiques sont en plastique clair ou foncé, de forme plane ou bombée et sont extrêmement légers comparés au substrats verriers inorganiques. Leur épaisseur peut varier entre 0.6 mm et 19 mm, en fonction des attentes et des besoins des utilisateurs finaux. Les substrats peuvent être partiellement revêtus d'un matériau opaque, en particulier sur leur périphérie, en particulier pour des raisons esthétiques. Les substrats peuvent aussi posséder une fonctionnalité propre (issue d'un empilement d'au moins une couche de type contrôle solaire, anti-reflets, bas-émissive, hydrophobe, hydrophile...) et dans ce cas le vitrage électrochrome associe les fonctions apportées par chaque élément afin de répondre aux besoins des utilisateurs.

Un intercalaire polymère est ici utilisé dans un but d'associer les deux substrats selon la procédure de feuilletage couramment utilisée dans le monde automobile ou du bâtiment afin d'aboutir à un produit de sécurité ou de confort : sécurité anti-éjection ou anti-balles pour une utilisation dans le domaine des transports et sécurité anti-effraction (anti-bris de verre) pour une utilisation dans le domaine des bâtiments, ou apportant grâce à cet intercalaire de feuilletage, une fonctionnalité acoustique, d'anti-solaire, ou de coloration. L'opération de feuilletage est aussi favorable dans le sens qu'elle isole l'empilement fonctionnel contre les agressions chimiques ou mécaniques. L'intercalaire est choisi de préférence à base d'éthylène vinylacétate (EVA) ou de ses copolymères, il peut aussi être en polyuréthane (PU), en polyvinylbutyral (PVB) en résine pluri où mono-composants réticulable thermiquement (époxy, PU) ou aux ultraviolets (époxy, résine acrylique). L'intercalaire de feuilletage est généralement transparent, mais il peut être coloré totalement ou partiellement pour répondre aux souhaits des utilisateurs.

L'isolation de l'empilement de l'extérieur est généralement complétée par des systèmes de joints placés sur les chants des substrats, voire partiellement à l'intérieur des substrats.

L'intercalaire de feuilletage peut aussi inclure des fonctions supplémentaires comme inclure une fonction anti-solaire apportée par exemple par un film plastique comportant des multicouches ITO/Métal/ITO ou un film composé d'un empilement de couches organiques.

L'invention concerne également le procédé de fabrication du dispositif selon l'invention : on peut déposer les couches de l'empilement fonctionnel (TC1 / EC1 / EL / EC2 / TC2) par une technique utilisant le vide, du type pulvérisation cathodique, éventuellement assistée par champ magnétique, par évaporation thermique ou assistée par un flux d'électrons, par ablation laser, par CVD (Chemical Vapor Deposition), éventuellement assistée par plasma ou par micro-ondes.

La couche active AC peut être déposée par une technique à pression atmosphérique, notamment par dépôt de couches par synthèse sol-gel, notamment de type trempé, spray-coating ou enduction laminaire. Dans le cas des systèmes simplifiés de types viologènes il peut être avantageux de recourir à un système d'injection du milieu AC entre les deux substrats. Les couches TC1 et TC2 sont déposées par une technique similaire à la structure d'empilement à 5 couches.

En fait, il est ici particulièrement avantageux de recourir à une technique de dépôt sous vide, notamment du type pulvérisation, car elle permet une maîtrise très fine des caractéristiques de la couche constituant l'électrolyte (vitesse de dépôt, densité, structure....)
- D'autres détails et caractéristiques avantageux de l'invention ressortent de la description faite ci- après en référence aux dessins annexés qui représentent :
- la figure 1 est vue de face de l'objet de l'invention,
- la figure 2 est une vue en coupe selon AA de la figure 1 illustrant un système électrochrome de nature essentiellement inorganique dit aussi « tout solide » (système classiquement à 5 couches),
- la figure 3 est une vue en coupe selon BB de la figure 1 illustrant un mode de réalisation de l'invention mettant en oeuvre un système électrochrome de nature essentiellement inorganique,
- la figure 4 est une vue en coupe selon AA de la figure 1 illustrant un système électrochrome de nature essentiellement organique,
- la figure 5 est une vue en coupe selon BB de la figure 1 illustrant un mode de réalisation de l'invention mettant en oeuvre un système électrochrome de nature essentiellement organique,
- les figures 6a et 6b illustrent respectivement une image de la surface et une courbe de rugosité obtenue (sur l'axe AA) du PMMA nu sur lequel aucun solvant n'a été déposé,
- les figures 7a et 7b illustrent respectivement une image de surface et une courbe de rugosité obtenue (sur l'axe AA) du PMMA nu sur lequel une goutte de carbonate de propylène a été déposée,
- les figures 8a et 8b illustrent respectivement une image de surface et une courbe de rugosité obtenue (sur l'axe AA) du PMMA recouvert de vernis organique sur lequel aucun solvant n'a été déposé,
- les figures 9a et 9b illustrent respectivement une Image de la surface et une courbe de rugosité obtenue (sur l'axe AA) du PMMA recouvert de vernis organique sur lequel une goutte de carbonate de propylène a été déposée.

Sur les dessins annexés, certains éléments peuvent être représentés à des dimensions plus grandes ou plus petites que dans la réalité, et ce afin de faciliter la compréhension de la figure.

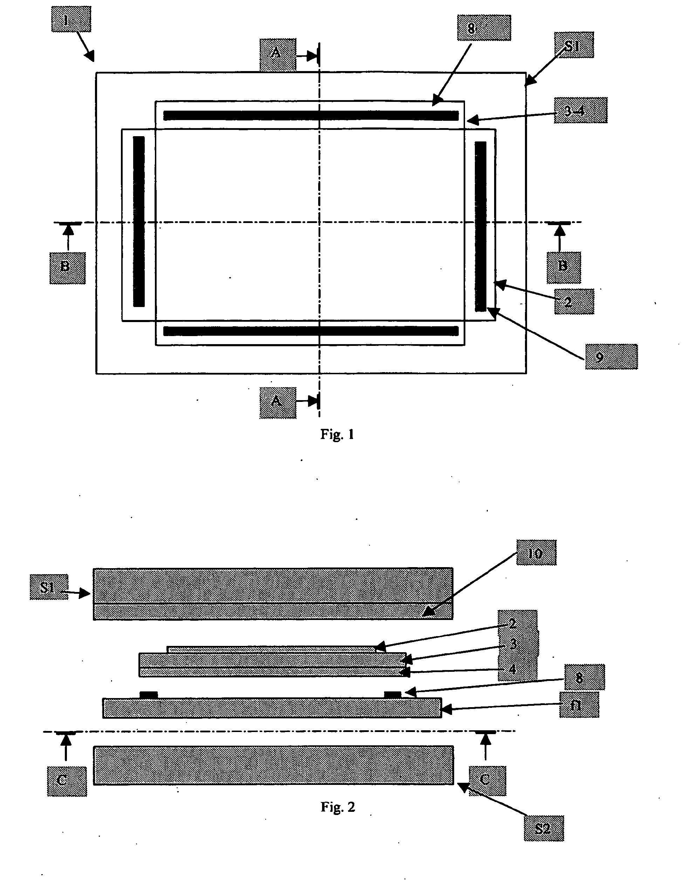

L'exemple illustré par les figures 1, 2 et 3, concerne un vitrage 1 électrochrome. Il comprend successivement, de l'extérieur vers l'intérieur de l'habitacle, deux substrats S1, S2 en plastique en PMMA étiré, ou en PC, COC de respectivement 2,1 mm ; 2,1 mm d'épaisseur par exemple.

Les substrats S1 et S2 sont de même taille et leurs dimensions sont 150 mm x 150 mm.

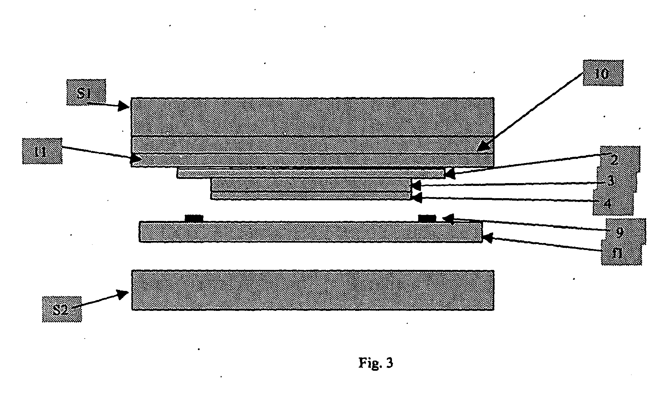

Le substrat S1 représenté en figures 2 et 3 comporte en face 2 un empilement de couches minces de type électrochrome tout solide (à 5 couches). Le substrat S1 est feuilleté au substrat S2 par une feuille f1 thermoplastique en polyuréthane (PU) de 0,8 mm d'épaisseur (elle peut être remplacée par une feuille d' éthylènevinylacétate (EVA) ou de polyvinylbutyral (PVB)).

On peut remarquer sur les figures que les couches de collecteur de courant 2 et/ou 4 (couches TC1 et/ou TC2 par exemple) ne sont pas en contact direct avec les substrats S1 et/ou S2.

On interpose entre le substrat et la couche électroconductrice au moins une couche organique 10 (visible en figure 2 et 3), améliorant l'adhésion de la couche TC1 et/ou TC2 avec le substrat et empêchant les attaques chimiques du substrat par la couche AC, qui est de nature organique et la couche électroconductrice qui est de nature essentiellement minérale.

Cette couche organique 10 est un vernis à base de polysiloxane. Ces polysiloxanes sont préparés à partir de silanes disponibles commercialement (par exemple chez Sigma-Aldrich-Fluka) préférentiellement à partir de tetraéthoxysilane (TEOS), méthyltriméthoxysilane (MTMS), ou encore phenyl triméthoxysilane (PTMS) et selon une épaisseur comprise entre 0.5 µm à 10 µm et préférentiellement de 1 à 3 µm.

Selon l'invention, on recouvre la couche organique 10 d'une couche inorganique 11 (représentée sur les figures 2 et 3, 4 et 5), la couche 11 étant par exemple Si₃N₄ si une couche barrière est nécessaire ou une couche SiOx faite par PECVD (Plasma Enhanced Chemical Vapor Deposition)

L'empilement de couches minces électrochrome comporte un empilement actif 3 placée entre deux matériaux conducteurs électroniques appelés aussi collecteurs de courant 2 et 4. Le collecteur 2 est destiné à être au contact de la face 2.

Les collecteurs 2 et 4 et l'empilement actif 3 peuvent être soit sensiblement de dimensions et de formes identiques, ou soit sensiblement de dimensions et de formes différentes, et on conçoit alors que le cheminement des collecteurs 2 et 4 sera adapté en fonction de la configuration. Par ailleurs, les dimensions des substrats en particulier S1 peuvent être essentiellement supérieures à celles de 2, 4 et 3. Les collecteurs 2 et/ou 4 peuvent aussi se présenter sous forme de grille, réseaux de fils ou similaires.

Les collecteurs 2 et 4 sont de type métallique ou du type TCO (Transparent Conductive Oxide) en ITO, SnO₂:F, ZnO :Al, ou être un multi-couche du type TCO/métal/TCO, ce métal étant choisi notamment parmi l'argent, l'or, le platine, le cuivre. Il peut s'agir également d'un multi-couche de type NiCr/métal/NiCr, le métal étant choisi également notamment parmi l'argent, l'or, le platine, le cuivre.

Selon les configurations, ils peuvent être supprimés et dans ce cas des amenées de courant sont directement en contact avec l'empilement actif 3.

Le vitrage 1 incorpore des amenées de courant 8, 9 qui permettent de commander le système actif via une alimentation électrique. Ces amenées de courant sont du type de celles utilisées pour les vitrages chauffants (à savoir clinquant, fils ou similaire).

Une forme préférée de réalisation du collecteur 2 consiste à déposer en face 2 un bicouche constitué d'une première couche à base de SiO₂ dopée ou non (notamment dopé avec de l'aluminium ou du bore) d'environ 20 nm surmontée d'une seconde couche d'ITO d'environ 100 à 600 nm (deux couches de préférence déposées successivement, sous vide, par pulvérisation cathodique assistée par champ magnétique et réactive en présence d'oxygène).

Une autre forme de réalisation du collecteur 2 consiste à déposer en face 2 une mono couche constituée d'ITO d'environ 100 à 600 nm (une couche de préférence déposée, sous vide, par pulvérisation cathodique assistée par champ magnétique et réactive en présence d'oxygène).

Le collecteur 4 est une couche d'ITO de 100 à 500 nm également déposée par pulvérisation cathodique réactive assistée par champ magnétique sur l'empilement actif.

L'empilement actif 3 représenté en figures 2 et 3 se décompose de la façon suivante :
- une couche de matériau électrochrome anodique en oxyde de nickel de 100 à 300 nm, alliée ou non à d'autres métaux. En variante non représentée sur les figures, la couche de matériau anodique est à base d'une couche en oxyde d'iridium de 40 à 100 nm.
- une couche en oxyde de tungstène de 100 nm,
- une couche en oxyde de tantale hydraté ou d'oxyde de silice hydraté ou d'oxyde de zirconium hydraté de 100 nm ou un mélange de ces derniers,
- une couche de matériau électrochrome cathodique à base d'oxyde de tungstène hydraté de 200 à 500 nm, préférentiellement de 300 et 400 nm, notamment voisine de 370 nm,

L'empilement actif 3 peut être incisé sur tout ou partie de sa périphérie de gorges réalisées par des moyens mécaniques ou par attaque par rayonnement laser, éventuellement pulsé, et ce afin de limiter les fuites électriques périphériques comme cela est décrit dans la demande française FR-2 781 084.

Par ailleurs, le vitrage représenté en figures 1, 2 et 3 incorpore (non représenté sur les figures) un premier joint périphérique en contact avec les faces 2 et 3, ce premier joint étant adapté pour réaliser une barrière aux agressions chimiques extérieures.

Un deuxième joint périphérique est en contact avec le chant de S1, le chant de S2 et la face 4, de manière à réaliser : une barrière, un moyen de montage avec le moyen de transport, une étanchéité entre l'intérieur et l'extérieur, une fonction esthétique, un moyen d'incorporation d'éléments de renfort.

Selon d'autres variantes de réalisation de l'invention, l'empilement actif 3 « tout solide » peut être remplacé par d'autres familles d'électrochromes du type polymère.

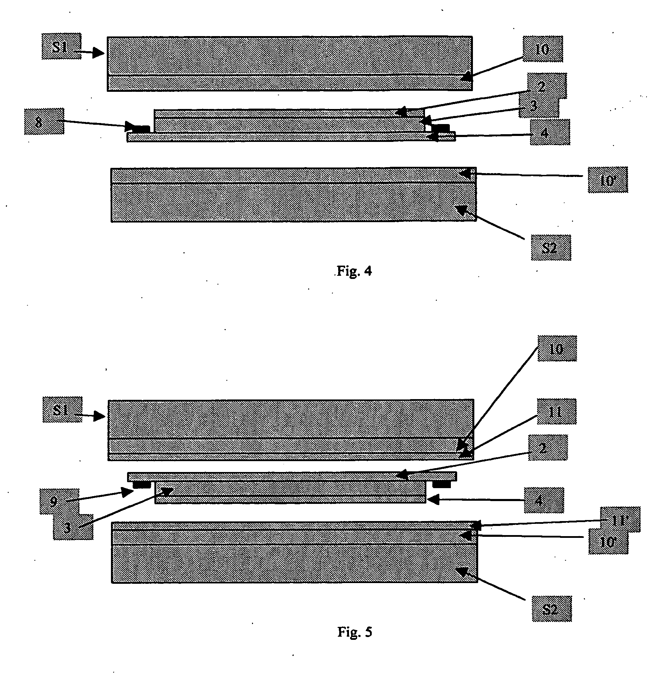

Dans la configuration représenté sur les figures 4 et 5, le système électrochrome (à 3 ou 5 couches) est directement assemblé entre deux substrats S1 et S2. Il s'agit d'une configuration du type : S1/couche organique (10)/ couche inorganique (11)/ TC1(2)/ milieu actif (3) / TC2 (4)/ couche inorganique (11')/couche organique (10')/Substrat S2.

Le milieu actif 3 peut être constitué de 3 couches polymères selon une première variante, ou d'un empilement mixte de couches inorganique et polymères selon une deuxième variante, ou encore d'un milieu unique constitué de viologènes et de phénazines solubilisés à une concentration typiquement de 3.10⁻² M dans, par exemple, du carbonate de propylène et dans lequel on pourra ajouter un sel de tertabutyl ammonium tetrafluoroborate à une concentration de 5.10⁻²M pour constituer l'électrolyte support.

Ces formes de réalisation intègrent les mêmes collecteurs 2 et 4 décrits précédemment pour les systèmes électrochrome de type tout solide.

En revanche, elles en diffèrent par le fait qu'elles ne requièrent pas pour l'assemblage des substrats organiques S1 et S2 d'intercalaire de feuilletage f1.

Ainsi, selon un premier exemple illustré en figure 4, une première partie formée d'une couche de matériau électrochrome ou autrement appelée couche active, en poly(3, 4-éthylène-dioxythiophène) de 10 à 10000 nm, de préférence de 50 à 500 nm sur un substrat PET recouvert d'une couche ITO; en variante il peut s'agir de l'un des dérivés de ce polymère, est déposée par des techniques connues de dépôt par voie liquide (pulvérisation ou « spray coating », trempage ou « dip coating », pulvérisation rotative ou « spin coating » ou par coulée), ou encore par électrodéposition, sur un substrat revêtu de son collecteur de courant, ce collecteur de courant pouvant être une couche conductrice inférieure ou supérieure formant l'électrode (l'anode ou la cathode), éventuellement pourvue de fils ou similaires. Quel que soit le polymère constituant cette couche active, ce polymère est particulièrement stable, notamment au UV, et fonctionne par insertion-désinsertion d'ions lithium (Li⁺) ou alternativement d'ions H⁺.

Une seconde partie jouant le rôle d'électrolyte, et formée d'une couche d'épaisseur comprise entre 50 nm à 2000 µm, et de préférence comprise entre 50 nm à 1000 µm, est déposée par une technique connue de dépôt par voie liquide (pulvérisation ou « spray coating », trempage ou « dip coating », pulvérisation rotative ou « spin coating » ou par coulée, entre les première et troisième parties sur la première partie ou encore par injection. Cette seconde partie est à base de polyoxyalkylène, notamment du polyoxyéthylène. En variante, il peut s'agit d'un électrolyte de type minéral, à base par exemple d'oxyde hydraté de tantale, de zirconium, ou de silicium.

Cette seconde partie d'électrolyte déposée sur la couche de matériau électrochrome active, elle-même supportée par le substrat organique comportant sa couche de vernis organique, est alors revêtue par une troisième partie dont la constitution est analogue à la première partie, à savoir cette troisième partie se décompose en un substrat, revêtu d'un collecteur de courant, ce collecteur de courant étant lui-même recouvert par une couche active.

Un second exemple correspond à un vitrage fonctionnant par transfert protonique. Il est constitué
■ d'un premier substrat S1 organique en PMMA étiré par exemple 1, de 4 mm, puis
■ d'une couche de vernis 10
• d'une première couche électroconductrice 2 de type TCO de 300 nm ,
• d'une première couche de matériau électrochrome anodique en oxyde de nickel hydraté NiOₓH_{y} de 185 nm, (elle pourrait être remplacée par une couche en oxyde d'iridium hydraté de 55 nm),
• d'un électrolyte se décomposant en une première couche en oxyde de tantale hydraté de 70 nm, une seconde couche en solution solide de polyoxyéthylène avec de l'acide phosphorique POE-H₃PO₄ de 100 micromètres, ou alternativement une solution solide de polyéthylène imine avec de l'acide phosphorique PEI-H₃PO₄,
• d'une seconde couche de matériau électrochrome cathodique à base d'oxyde de tungstène de 350 nm,
• d'une seconde couche électroconductrice 4 de type TCO de 300 nm,
• d'une couche de vernis 10
• puis d'un second substrat organique S2 identique au premier.

On a donc, dans cet exemple, un électrolyte bi-couche à base de polymère habituellement utilisé dans ce type de vitrage, qui est « doublé » d'une couche d'oxyde de tantale hydraté suffisamment conductrice pour ne pas pénaliser le transfert de protons via le polymère et qui protège la contre-électrode en matériau électrochrome anodique du contact direct avec ce dernier, dont l'acidité intrinsèque lui serait préjudiciable.

A la place de la couche en Ta₂O₅ hydraté peut être utilisée une couche de type Sb₂O₅ ou TaWOₓ hydraté.

On peut aussi prévoir un électrolyte tri-couche, avec deux couches d'oxyde hydraté, soit de part et d'autre de la couche de polymère, soit superposées l'une à l'autre du côté de la couche de matériau électrochrome anodique.

Selon l'invention, on prévoit de disposer entre la couche organique et la couche électroconductrice TC1 et/ou TC2, une couche barrière 11 (visible notamment en figure 3 et en figure 4) à base de nitrure, d'oxyde, ou d'oxynitrure, de carbure choisi parmi le silicium, l'aluminium, ou à base de nitrure ou d'oxynitrure ou de carbure d'aluminium ou d'un mélange d'au moins deux de ces composés (nitrures ou oxynitrures mixtes Si-Al), cette couche barrière possède une épaisseur de 50 nm à 500 nm et préférentiellement de 100 nm à 300 nm.

En variante, cette couche barrière peut être composée de plusieurs couches inorganiques choisie parmi celles précédemment citées, ou une alternance de couches organiques et inorganiques, les couches organiques étant choisies parmi les polysiloxanes, les polysilanes, les polyacrylates, les polyacétates, les polyesters, les celluloses.

Selon encore une autre variante, la couche barrière peut être réalisée à partir d'oxyde d'étain, d'oxyde de zinc, d'oxyde de titane, d'oxyde de chrome, d'oxyde de cuivre, d'oxyde de germanium, d'oxyde d'indium, d'oxyde d'iridium, d'oxyde d'antimoine, d'oxyde de tantale, d'oxyde de zircone, ou d'un composé du type SiOₓC_{y}H_{z}, ou TiOₓC_{y}H_{z}.

Un troisième exemple (illustrés globalement par les figures 1 à 3, sauf en ce qui concerne la couche organique 10 qui est absente) correspond à un système « à 5 couches » en utilisant un substrat organique de type dalle de PMMA de 4mm d'épaisseur qui a subit pour seul traitement un lavage au RBS avant les dépôts de couches d'oxydes métalliques . Il est constitué
- d'un premier substrat S1 organique par exemple en PMMA étiré de 4 mm
- d'une couche TCO 2 à base d'ITO a été déposée avec une épaisseur de 500nm,
- d'un empilement EC1/EL/EC2 (formant le système 3) judicieusement choisies parmi les couches d'oxydes précédemment citées ont été déposées,
- d'une couche TCO 4 à base d'ITO,
- d'un second substrat S2 organique par exemple en PMMA étiré de 4 mm

Le substrat S1 en PMMA étiré sur lequel l'empilement précédemment décrit a été déposé est ensuite feuilleté, à S2 en même temps que sont posées les connectiques, à l'aide d'un intercalaire f1 en PU et d'un contre verre inorganique.

La cellule ainsi obtenue est ensuite cyclée entre -2V et 1V de manière à la colorer et la décolorer. Quels que soient les temps d'équilibre à un potentiel donné (2min, 10min ou 60min), les transmissions lumineuses mesurées aux deux potentiels sont proches de 50%. La cellule est donc non fonctionnelle et de nombreuses craquelures sont observées, à l'oeil nu, au niveau des couches, et sont le signe d'une mauvaise adhésion entre le substrat organique et les couches électroconductrices et/ou électroactives.

Un quatrième exemple (illustrés par les figures 1 à 3) correspond à un système « à 5 couches » en utilisant un substrat organique de type dalle de PMMA de 4mm d'épaisseur sur laquelle a été déposée par ruissellement (ou flow coating) une couche de vernis organique 10 à base de polysiloxane. Exactement les mêmes couches d'oxydes métalliques que celles décrites dans le troisième exemple ont ensuite été déposées sur la dalle de PMMA + le vernis à base de polysiloxanes en conservant les mêmes conditions de dépôts que celles utilisées dans le troisième exemple. L'assemblage de la cellule par feuilletage avec un intercalaire de PU ainsi que la pose des connectiques demeurent aussi identiques à ceux du troisième exemple.

La cellule ainsi obtenue est ensuite cyclée entre -2V et 1V de manière à la colorer et la décolorer. La cellule passe ainsi d'une couleur bleu foncé à une couleur gris-brunâtre et les valeurs de transmission lumineuses, mesurées après des temps d'équilibre de 2 minutes, varient de 2% à 50%. La fonctionnalité de cette cellule réalisée sur dalle de PMMA + vernis 10 à base de siloxane est tout à fait satisfaisante, avec un contraste de 25, et aucune craquelure n'est observée, que ce soit à l'oeil nu ou au microscope. Un cinquième exemple illustre la protection qu'apporte le vernis organique sur un substrat polymère tel que le PMMA. Des gouttes de carbonate de propylène (environ 2mL) ont été déposées sur trois substrats à base de PMMA :
- PMMA nu,
- PMMA + vernis organique (à base de polysiloxane)
- PMMA + vernis organique (à base de polysiloxane) + couche d'ITO Après plusieurs heures à température ambiante, le carbonate de propylène a réagi avec le PMMA nu, alors qu'aucune réaction n'est observée sur les deux autres substrats : une fois essuyée, la goutte de carbonate de propylène laisse une trace sur le PMMA nu, cette trace correspond à une zone gonflée, avec une surépaisseur globale d'environ 6 microns par rapport à la zone qui n'a pas été en contact avec le carbonate de propylène.

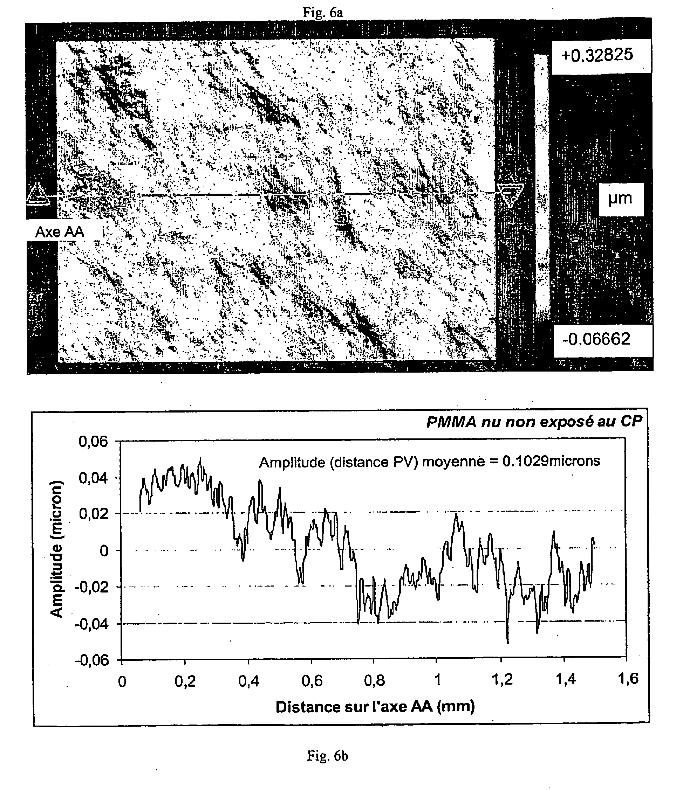

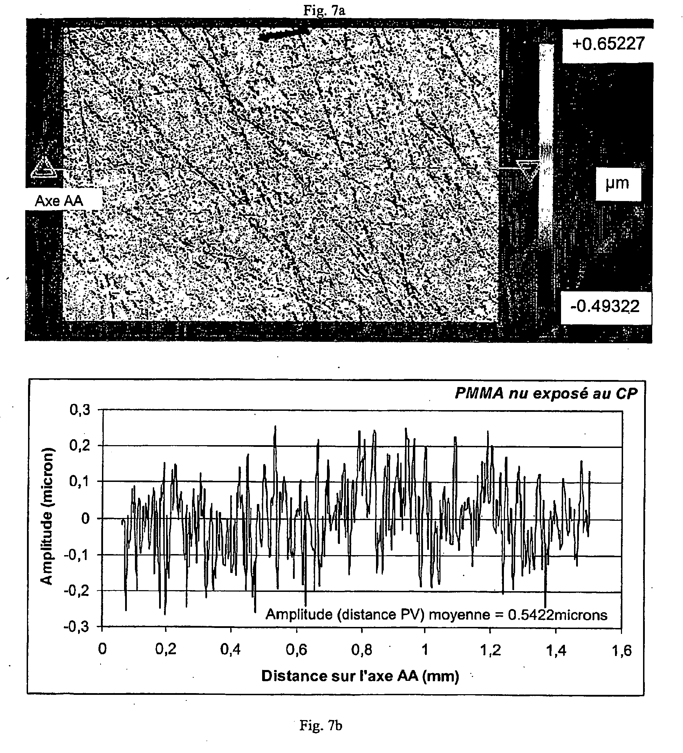

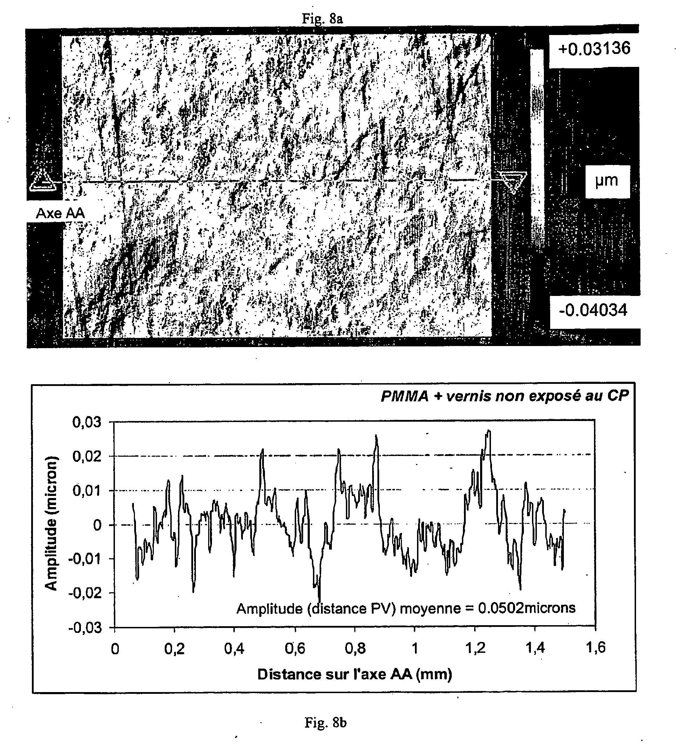

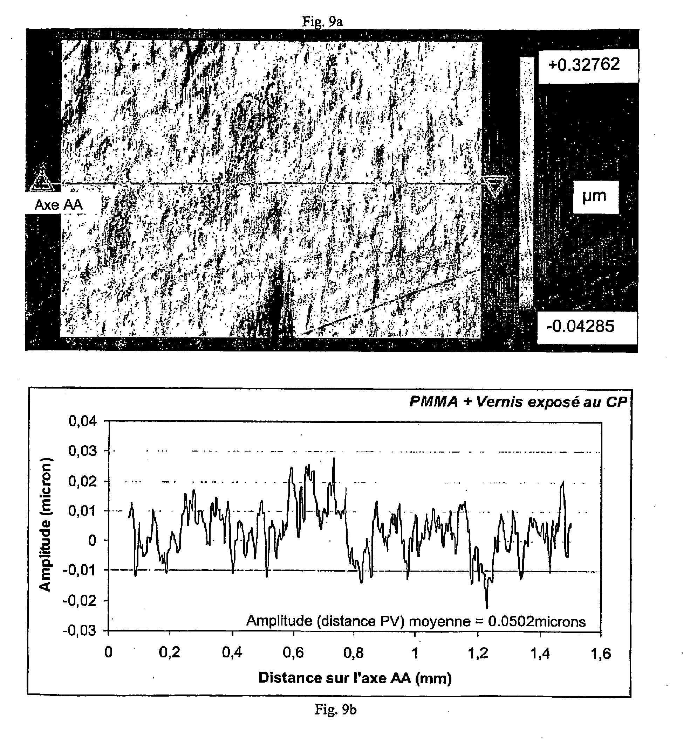

De plus, sur le PMMA nu et le PMMA + vernis organique, les zones sur lesquelles des gouttes de carbonate de propylène avaient été déposées ont été analysées au profilomètre et ont été comparées aux zones n'ayant jamais été en contact avec du carbonate de propylène. Les figures 6a à 9a représentent les images des surfaces ainsi les courbes de rugosité ainsi obtenues (6a à 9b). Les surfaces sur les figures 6b et 7b sont très différentes, de plus, la distance moyenne PV (distance entre le haut des pics et le creux des vallées) des courbes de rugosité passe de 0.10 à 0.54 microns entre le PMMA nu sur lequel aucun solvant n'a été déposé et le PMMA nu sur lequel une goutte de carbonate de propylène a été déposée. Ceci correspond à des rayures plus profondes sur le PMMA nu mis en contact avec du carbonate de propylène que sur le PMMA nu jamais mis en contact avec le carbonate de propylène. En revanche, les images de surfaces sur les figures 8a et 9a sont semblables et la distance moyenne PV est identique pour la zone de PMMA + vernis organique sur laquelle une goutte de PMMA a été déposée et sur la zone de PMMA + vernis organique sur laquelle aucun solvant n'a été déposé.

## Revendications

1. Système électrochrome comportant au moins un substrat de nature organique (51,52), au moins une couche électroconductrice (2,4) et au moins une couche active (10), **caractérisé en ce qu'**il comprend au moins une couche de vernis organique (10) située entre la couche électroconductrice et le substrat, une couche barrière (11), à base de nitrure, d'oxyde ou d'oxynitrure, de silicium, ou à base de nitrure ou d'oxyde ou d'oxynitrure d'aluminium ou d'un mélange d'au moins deux de ces composés, nitrures ou oxynitrures mixtes Si-Al, interposée entre la couche de vernis organique et la couche électroconductrice.

2. Système selon la revendication 1, **caractérisé en ce que** le substrat comprend du PMMA.

3. Système selon la revendication 1, **caractérisé en ce que** le substrat est du PMMA étiré.

4. Système selon l'une des revendications précédentes, **caractérisé en ce que** la couche de vernis organique est une couche de vernis à base de polysiloxane.

5. Système selon la revendication 4, **caractérisé en ce que** la couche de vernis organique possède une épaisseur comprise entre 0.5 µm à 10 µm et préférentiellement de 1 à 3 µm.

6. Système selon l'une des revendications précédentes, **caractérisé en ce que** la couche électroconductrice est du type métallique ou du type Transparent Conductive Oxide (TCO) en ITO, SnO₂:F, ZnO:Al, ou un multi-couche du type TCO/métal/TCO, ce métal étant choisi notamment parmi l'argent, l'or, le platine, le cuivre, ou un multi-couche de type NiCr/métal/NiCr, le métal étant choisi également notamment parmi l'argent, l'or, le platine, le cuivre.

7. Système selon la revendication précédente, **caractérisé en ce que** la couche barrière possède une épaisseur de 50 nm à 500 nm et préférentiellement de 100 nm à 300 nm.

8. Système selon l'une quelconque des revendications précédentes, **caractérisé en ce que** la couche active AC comprend dans un même milieu des matériaux électroactifs à coloration anodique et cathodique, un ou plusieurs solvants, éventuellement un ou plusieurs polymères et éventuellement un ou plusieurs sels ioniques jouant le rôle d'électrolyte.

9. Système selon la revendication précédente, **caractérisé en ce que** les matériaux à coloration anodique sont des composés organiques comme les dérivés de la phénazine comme par exemple la 5,10-dihydrophénazine, de la 1,4-phénylènediamine, de benzidine, de métallocène, de phénothiazine, de carbazole.

10. Système selon la revendication 8, **caractérisé en ce que** les matériaux à coloration cathodique sont des composés organiques comme les dérivés de viologène (sel de bipyridinium) comme les méthyl-viologène tétrafluoroborates, les octyl-viologène tétrafluoroborates, ou de quinone ou de polythiophène.

11. Système selon la revendication 8, **caractérisé en ce que** les solvants sont du diméthylsulfoxyde, du N,N-diméthylformamide, du carbonate de propylène, du carbonate d'éthylène, de la N-méthyl pyrolidinone, de la gamma butyrolactone, des liquides ioniques, des éthylène glycols, des alcools, des cétones, des nitriles.

12. Système selon la revendication 8, **caractérisé en ce que** les polymères sont des polyéthers, des polyesters, des polyamides, des polyimides , des polycarbonates, des polyméthacrylates, des polyacrylates, des polyacétates, des polysilanes, les polysiloxanes, des celluloses.

13. Système selon la revendication 8, **caractérisé en ce que** les sels ioniques sont du perchlorate de lithium, des sels de trifluorométhanesulfonate (triflate), des sels de trifluorométhanesulfonylimide, des sels ammoniums ou encore des liquides ioniques.

14. Système selon la revendication 8, **caractérisé en ce que** la couche active AC possède une épaisseur de 50 µm à 500 µm et préférentiellement de 150 µm à 300 µm.

15. Système selon l'une quelconque des revendications 1 à 7, **caractérisé en ce que** la couche active est sous forme de couche électrochimiquement active comportant au moins un des composés suivants : oxyde de tungstène W, de niobium Nb, d'étain Sn, de bismuth Bi, de vanadium V, de nickel Ni, d'iridium lr, de l'antimoine Sb, du tantale Ta, seul ou en mélange, et comprenant éventuellement un métal additionnel tel que le titane, le tantale ou le rhénium.

16. Système selon l'une quelconque des revendications 1 à 7, **caractérisé en ce qu'**il comporte en outre une couche à fonction électrolyte choisie parmi le nitrure de silicium (Si₃N₄), l'oxyde de molybdène (MoO₃), l'oxyde de tantale (Ta₂O₅), l'oxyde d'antimoine (Sb₂O₅), l'oxyde de nickel (NiOₓ), l'oxyde d'étain (SnO₂) l'oxyde de zirconium (ZrO₂), l'oxyde d'aluminium (Al₂O₃), de l'oxyde de silicium (SiO₂), l'oxyde de niobium (Nb₂O₅), l'oxyde de chrome (Cr₂O₃), l'oxyde de cobalt (Co₃O₄), l'oxyde de titane (TiO₂), l'oxyde de zinc (ZnO) éventuellement allié avec de l'aluminium, oxyde d'étain et de zinc (SnZnOx), l'oxyde de vanadium (V₂O₅), au moins un de ces oxydes étant éventuellement hydrogéné, ou nitruré, le matériau électrochimiquement actif et le matériaux à fonctions électrolyte sont compris dans un même milieux.

17. Vitrage électrochrome, **caractérisé en ce qu'**il comporte le système électrochrome selon l'une des revendications précédentes, présentant notamment une transmission et/ou réflexion lumineuse et/ou énergétique variable, avec le substrat ou au moins une partie des substrats transparent(s) ou partiellement transparent(s), en matériau plastique, de préférence monté en vitrage multiple et/ou feuilleté, ou en double vitrage.

18. Vitrage électrochromes, comportant le système électrochrome selon l'une des revendications 1 à 16, **caractérisé en ce qu'**il est associé à au moins une autre couche adaptée pour apporter une fonctionnalité supplémentaire (contrôle solaire, bas émissif, hydrophobe, hydrophile, antireflet) audit vitrage.

19. Procédé de fabrication du système électrochrome selon l'une des revendications 1 à 16, **caractérisé en ce qu'**on dépose au moins l'une des couches du système électrochrome par une technique utilisant le vide, du type pulvérisation cathodique, éventuellement assistée par champ magnétique, par évaporation thermique ou assistée par un flux d'électrons, par ablation laser, par CVD, éventuellement assistée par plasma ou par micro-ondes, ou par une technique à pression atmosphérique, notamment par dépôt de couches par synthèse sol-gel, notamment de type trempé, spray-coating ou enduction laminaire.

20. Utilisation du vitrage selon l'une des revendications 17 ou 18 en tant que vitrage pour le bâtiment, vitrage pour l'automobile, vitrage de véhicules industriels ou de transport collectif, ferroviaire, maritime, aérien, en particulier hublot, rétroviseurs, miroirs.

## Claims

1. Electrochromic system comprising at least one substrate of organic nature (S1, S2), at least one electronically conductive layer (2, 4), at least one layer of organic varnish (10) lying between the electronically conductive layer and the substrate, and at least one active layer, **characterized in that** it includes a barrier layer (11), based on silicon nitride, oxide or oxynitride, or based on aluminum nitride or oxide or oxynitride or on a mixture of at least two of these compounds, mixed Si/A1 nitrides or oxynitrides, interposed between the organic varnish layer and the electronically conductive layer.

2. System according to Claim 1, **characterized in that** the substrate comprises PMMA.

3. System according to Claim 1, **characterized in that** the substrate is drawn PMMA.

4. System according to one of the preceding claims, **characterized in that** the organic varnish layer is a layer of polysiloxane-based varnish.

5. System according to Claim 4, **characterized in that** the organic varnish layer has a thickness between 0.5 µm and 10 µm and preferably from 1 to 3 µm.

6. System according to one of the preceding claims, **characterized in that** the electronically conductive layer is of the metallic type or of the transparent conductive oxide (TCO) type made of ITO, SnO₂:F, ZnO:Al, or a multilayer of the TCO/metal/TCO type, this metal being chosen especially from silver, gold, platinum and copper, or a multilayer of the NiCr/metal/NiCr type, the metal also being chosen especially from silver, gold, platinum and copper.

7. System according to the preceding claim, **characterized in that** the barrier layer has a thickness of 50 nm to 500 nm and preferably 100 nm to 300 nm.

8. System according to any one of the preceding claims, **characterized in that** the active layer AC comprises in one and the same medium, anodic-coloration and cathodic-coloration electroactive materials, one or more solvents, optionally one or more polymers and optionally one or more ionic salts acting as electrolyte.

9. System according to the preceding claim, **characterized in that** the anodic-coloration materials are organic compounds such as phenazine derivatives, for example 5,10-dihydrophenazine, 1,4-phenylenediamine, benzidine, metallocene, phenothiazine and carbazole.

10. System according to Claim 8, **characterized in that** the cathodic-coloration materials are organic compounds such as derivatives of viologen (a bipyridinium salt) such as methyl viologen tetrafluoroborates, octyl viologen tetrafluoroborates, or quinone or polythiophene.

11. System according to Claim 8, **characterized in that** the solvents are dimethyl sulfoxide, N,N-dimethylformamide, propylene carbonate, ethylene carbonate, N-methylpyrolidinone, γ-butyrolactone, ionic liquids, ethylene glycols, alcohols, ketones and nitriles.

12. System according to Claim 8, **characterized in that** the polymers are polyethers, polyesters, polyamides, polyimides, polycarbonates, polymethacrylates, polyacrylates, polyacetates, polysilanes, polysiloxanes and celluloses.

13. System according to Claim 8, **characterized in that** the ionic salts are lithium perchlorate, trifluoromethanesulfonate (triflate) salts, trifluoromethanesulfonylimide salts, ammonium salts or ionic liquids.

14. System according to Claim 8, **characterized in that** the active layer AC has a thickness of 50 µm to 500 µm and preferably 150 µm to 300 µm.

15. System according to any one of Claims 1 to 7, **characterized in that** the active layer is in the form of an electrochemically active layer comprising at least one of the following compounds: tungsten (W) oxide, niobium (Nb) oxide, tin (Sn) oxide, bismuth (Bi) oxide, vanadium (V) oxide, nickel (Ni) oxide, iridium (Ir) oxide, antimony (Sb) oxide or tantalum (Ta) oxide, by itself or as a mixture, and optionally including an additional metal such as titanium, tantalum or rhenium.

16. System according to any of Claims 1 to 7, **characterized in that** it further comprises a layer having an electrolytic function, chosen from silicon nitride (Si₃N₄) , molybdenum oxide (MoO₃) , tantalum oxide (Ta₂O₅) , antimony oxide (Sb₂O₅) , nickel oxide (NiOₓ), tin oxide (SnO₂), zirconium oxide (ZrO₂) , aluminum oxide (Al₂O₃) , silicon oxide (SiO₂) , niobium oxide (Nb₂O₅) , chromium oxide (Cr₂O₃) , cobalt oxide (Co₃O₄) , titanium oxide (TiO₂), zinc oxide (ZnO) optionally alloyed with aluminum, tin zinc oxide (SnZnOₓ), vanadium oxide (V₂O₅) , at least one of these oxides being optionally hydrogenated or nitrided, the electrochemically active material and the materials having an electrolytic function are included in one and the same medium.

17. Electrochromic glazing, **characterized in that** it comprises the electrochromic system according to one of the preceding claims, having in particular a variable light and/or energy transmission and/or reflection, with the transparent or partially transparent substrate or at least some of the transparent or partially transparent substrates, made of a plastic, preferably mounted as multiple and/or laminated glazing or as double glazing.

18. Electrochromic glazing, comprising the electrochromic system according to one of Claims 1 to 16, **characterized in that** it is combined with at least one other layer suitable for providing said glazing with an additional functionality (solar-control, low-E, hydrophobic, hydrophilic or antireflection functionality).

19. Process for manufacturing the electrochromic system according to one of Claims 1 to 16, **characterized in that** at least one of the layers of the electrochromic system is deposited by a vacuum technique, of the sputtering type, optionally magnetron or magnetically enhanced sputtering, by thermal evaporation or electron-beam evaporation, by laser ablation, by CVD, optionally plasma-enhanced or microwave-enhanced CVD, or by an atmospheric-pressure technique, especially by the deposition of layers by sol-gel synthesis, particularly dip coating, spray coating or laminar flow coating.

20. Use of the glazing according to either of Claims 17 and 18 as architectural glazing, automotive glazing, glazing for industrial or public transport vehicles, railroad vehicles, ships and aircraft, particularly as windows, rear-view mirrors and other mirrors.

## Patentansprüche

1. Elektrochromes System, das mindestens ein Substrat (51, 52) mit organischem Charakter, mindestens eine elektrisch leitfähige Schicht (2, 4), mindestens eine Schicht (10) aus einem organischem Lack, die sich zwischen der elektrisch leitfähigen Schicht und dem Substrat befindet, und mindestens eine aktive Schicht umfasst, **dadurch gekennzeichnet, dass** es eine Sperrschicht (11) auf der Basis von Siliciumnitrid, -oxid bzw. -nitridoxid oder auf der Basis von Aluminiumnitrid, -oxid bzw. -nitridoxid oder eines Gemischs aus mindestens zwei dieser Verbindungen, gemischten Si-Al-Nitriden oder - Nitridoxiden, die zwischen der Schicht aus einem organischen Lack und der elektrisch leitfähigen Schicht angeordnet ist, umfasst.

2. System nach Anspruch 1, **dadurch gekennzeichnet, dass** das Substrat PMMA umfasst.

3. System nach Anspruch 1, **dadurch gekennzeichnet, dass** das Substrat gerecktes PMMA ist.

4. System nach einem der vorhergehenden Ansprüche, **dadurch gekennzeichnet, dass** die Schicht aus einem organischen Lack eine Lackschicht auf der Basis von Polysiloxan ist.

5. System nach Anspruch 4, **dadurch gekennzeichnet, dass** die Schicht aus einem organischen Lack eine Dicke von 0,5 bis 10 µm und vorzugsweise 1 bis 3 µm besitzt.

6. System nach einem der vorhergehenden Ansprüche, **dadurch gekennzeichnet, dass** die elektrisch leitfähige Schicht vom Typ Metall oder Transparent Conductive Oxide, TCO, aus ITO, SnO₂:F bzw. ZnO:Al oder eine Multischicht vom Typ TCO/Metall/TCO ist, wobei dieses Metall insbesondere aus Silber, Gold, Platin und Kupfer ausgewählt ist, oder eine Multischicht vom Typ NiCr/Metall/NiCr ist, wobei das Metall ebenfalls insbesondere aus Silber, Gold, Platin und Kupfer ausgewählt ist.

7. System nach dem vorhergehenden Anspruch, **dadurch gekennzeichnet, dass** die Sperrschicht eine Dicke von 50 bis 500 nm und vorzugsweise von 100 bis 400 nm besitzt.

8. System nach einem der vorhergehenden Ansprüche, **dadurch gekennzeichnet, dass** die aktive Schicht AC in ein und demselben Medium elektrisch aktive Materialien mit anodischer und kathodischer Färbung, ein oder mehrere Lösungsmittel, gegebenenfalls ein oder mehrere Polymere und gegebenenfalls ein oder mehrere ionische Salze, die die Aufgabe eines Elektrolyten übernehmen, umfasst.

9. System nach dem vorhergehenden Anspruch, **dadurch gekennzeichnet, dass** die Materialien mit anodischer Färbung organische Verbindungen wie Derivate des Phenazins, beispielsweise 5,10-Dihydrophenazin, des 1,4-Phenylendiamins, Benzidins, Metallocens, Phenothiazins und Carbazols sind.

10. System nach Anspruch 8, **dadurch gekennzeichnet, dass** die Materialien mit kathodischer Färbung organische Verbindungen wie Derivate des Viologens (Bipyridiniumsalz) wie die Methylviologentetrafluorborate und Octylviologentetrafluorborate, des Chinons oder Polythiophens sind.

11. System nach Anspruch 8, **dadurch gekennzeichnet, dass** die Lösungsmittel Dimethylsulfoxid, N,N-Dimethylformamid, Propylencarbonat, Ethylencarbonat, N-Methylpyrrolidinon, γ-Butyrolacton, ionische Flüssigkeiten, Ethylenglykole, Alkohole, Ketone und Nitrile sind.

12. System nach Anspruch 8, **dadurch gekennzeichnet, dass** die Polymere Polyether, Polyester, Polyamide, Polyimide, Polycarbonate, Polymethacrylate, Polyacrylate, Polyacetate, Polysilane, Polysiloxane und Cellulosen sind.

13. System nach Anspruch 8, **dadurch gekennzeichnet, dass** die ionischen Salze Lithiumperchlorat, Salze des Trifluormethansulfonats (Triflats), Trifluormethansulfonylimidsalze, Ammoniumsalze oder ionische Flüssigkeiten sind.

14. System nach Anspruch 8, **dadurch gekennzeichnet, dass** die aktive Schicht AC eine Dicke von 50 bis 500 µm und vorzugsweise von 150 bis 300 µm besitzt.

15. System nach einem der Ansprüche 1 bis 7, **dadurch gekennzeichnet, dass** die aktive Schicht aus elektrochromem Material in Form einer aktiven Schicht vorliegt, die mindestens eine der folgenden Verbindungen: Oxid des Wolframs, W, Niobs, Nb, Zinns, Sn, Wismuts, Bi, Vanadiums, V, Nickels, Ni, Iridiums, Ir, Antimons, Sb, und Tantals, Ta, einzeln oder im Gemisch und gegebenenfalls ein weiteres Metall wie Titan, Tantal oder Rhenium umfasst.

16. System nach einem der Ansprüche 1 bis 7, **dadurch gekennzeichnet, dass** es außerdem eine Schicht mit Elektrolytfunktion umfasst, die aus Siliciumnitrid (Si₃N₄), Molybdänoxid (MoO₃), Tantaloxid (Ta₂O₅), Antimonoxid (Sb₂O₅), Nickeloxid (NiOₓ), Zinnoxid (SnO₂), Zirconiumoxid (ZrO₂), Aluminiumoxid (Al₂O₃), Siliciumoxid (SiO₂), Nioboxid (Nb₂O₅), Chromoxid (Cr₂O₃), Cobaltoxid (Co₃O₄), Titanoxid (TiO₂), Zinkoxid (ZnO), gegebenenfalls legiert mit Aluminium, Zinn- und Zinkoxid (SnZnOₓ) und Vanadiumoxid (V₂O₅) ausgewählt ist, wobei mindestens eines dieser Oxide gegebenenfalls hydriert oder nitridiert ist und das elektrochemisch aktive Material und das Material mit Elektrolytfunktion in ein und demselben Medium enthalten sind.

17. Elektrochromes Glas, **dadurch gekennzeichnet, dass** es das elektrochrome System nach einem der vorhergehenden Ansprüche umfasst, das insbesondere eine lichttechnische und/oder energetisch veränderliche Transmission und/oder Reflexion aufweist, wobei das Substrat oder wenigstens ein Teil des/der transparenten oder teilweise transparenten Substrate/s aus einem Kunststoff besteht, und es vorzugsweise in einer Mehrfachverglasung und/oder einem Verbundglas oder einer Doppelverglasung eingebaut ist.

18. Elektrochromes Glas, welches das elektrochrome System nach einem der Ansprüche 1 bis 16 umfasst, **dadurch gekennzeichnet, dass** es mit mindestens einer weiteren Schicht verbunden ist, die geeignet ist, dem Glas eine zusätzliche Funktionalität (Steuerung der Sonneneinstrahlung, niedrig emittierend, hydrophob, hydrophil und Anti-Reflex) hinzuzufügen.

19. Verfahren zur Herstellung des elektrochromen Systems nach einem der Ansprüche 1 bis 16, **dadurch gekennzeichnet, dass** mindestens eine der Schichten des elektrochromen Systems durch ein Väkuumverfahren wie die gegebenenfalls magnetfeldgestützte Kathodenzerstäubung, durch thermisches Aufdampfen oder durch einen Elektronenstrom unterstützt, durch Laserablation, durch CVD, gegebenenfalls durch Plasma oder Mikrowellen unterstützt, oder durch ein Verfahren bei Atmosphärendruck, insbesondere durch Aufbringen von Schichten durch Sol-Gel-Synthese, speziell vom Typ Tauchbeschichten, Sprühbeschichten oder Walzauftrag aufgebracht wird.

20. Verwendung des Glases nach Anspruch 17 oder 18 als Verglasung von Gebäuden, Kraftfahrzeugen, Industriefahrzeugen, kollektiven Transportmitteln, schienengebundenen, maritimen und Lufttransportmitteln, insbesondere als Bullauge, Rückspiegel und Spiegel.
